Europäisches Patentamt

**European Patent Office**

**Office européen des brevets**

(11) Publication number: **0 005 753**

**A1**

## EUROPEAN PATENT APPLICATION

(21) Application number: **79101437.6**

(22) Date of filing: **10.05.79**

(51) Int. Cl.²: **F 24 J 3/02**

(30) Priority: **18.05.78 IT 2354178**

(43) Date of publication of application:
**12.12.79 Bulletin 79/25**

(84) Designated Contracting States:
**AT BE CH DEFR GB IT NL SE**

(71) Applicant: **Nardini, Gian Vieri
Strada Privata del la Chiocciola 44
Carimate (Como)(IT)**

(72) Inventor: **Nardini, Gian Vieri
Strada Privata del la Chiocciola 40
Carimate (Como)(IT)**

The other inventor has agreed to waive his entitlement to designation

(74) Representative: **Tiedtke, Harro, Dipl.-Ing. et al,
Patentanwaltsbüro Tiedtke-Bühling
Kinne-Grupe-Pellmann-Dragotti Bavariaring 4
D-8000 München 2(DE)**

(54) Devices for recovering solar energy.

(57) A solar energy captor adapted to be combined with roofings or coverings of buildings, and for heating a fluid, preferably water, by absorbing the heat of sun rays.

The flow chamber (17) for the fluid to be heated is defined by an upper membrane (4) of the type suitable for absorbing heat from sun rays, it being chosen from among the permanent waterproofing membranes as used in the building industry, and by a lower impermeable layer (7). The flow of fluid through the flow chamber (17) is controlled by means of suitable spacing means (5) posing a predetermined and specific resistance to the flow of fluid.

Fig.1

Croydon Printing Company Ltd.

# DEVICES FOR RECOVERING SOLAR ENERGY.

The present invention relates to devices capable of catching the heat of the sun rays in order to heat fluids.

Devices of various kinds and shapes are known, and are nowadays being accepted into common usage, by which the heat of the sun rays is caught in order to heat fluids.

These devices are commonly named solar captors, solar collectors, solar panels or still otherwise.

For sake of clarity and of general understanding, the expression "solar energy captors" is preferred and will be used hereinafter.

In a very general way, a solar energy captor is made up by the following components: one or more screens of transparent material; a black or dark-coloured surface, capable of absorbing the sun rays; a system of ducts wherein the fluid to be heated is made to circulate, said fluid being either air or water or any aqueous solution or a liquid different from water; a layer of insulating material, capable of retaining heat in order to limit any heat loss; finally, a supporting structure.

In the majority of the models that have been constructed up to date, the supporting structure is similar to a window-frame, thus defining a panel or the like: this gave rise to the common expression "solar panels".

Also, in most of the models, the metal surface is that of a metal sheet suitably blackened and the fluid ducts are obtained by shaping the said sheet and joining it with another sheet, shaped as well, in order to leave between both sheets elongated and interconnected cavities such as will form indeed a system of ducts.

In other models, the blackened metal sheet is welded to tubes, also of metal, or the black surface belongs to metal fins integrally formed with said tubes, during their manu facturing. Still other models of solar energy captors are known whose black surface belongs to sheets of plastic materials such as polypropylene, or of elastomers such as ethylene-propylene copolymers, or else; the ducts are obtained by extrusion, within said sheets, when manufacturing them. As these short notes make it clear, in the solar energy captors known to date use is made of materials chosen from among those industrially currently available; however, they are converted into structural shapes especially suited for being used in said captors.

Furthermore, whatever the structure of the solar energy captor, all known models are independent and self-contained units that must be superposed, for instance, on a terrace or on the roof of a building, thus requiring considerable work for their installation, for connection with hydraulic circuits and so on, the cost of which bears heavily on the overall cost of recovering the solar energy.

It is the main object of the present invention to provide a solar energy captor as integral structure with the building to whose service the heat recovered by said captor is destined.

It is another object of the present invention to provide a solar energy captor built in the covering or roofing of the building which it serves and including means that allow a natural circulation of the fluid, especially water, that it is desired to heat.

It is a further object of the present invention to provide a solar energy captor which affords a considerable saving on all counts, including the cost of the materials used, the construction and installation costs, the cost of maintenance during operation, while performing the recovery of heat as efficiently as any other.

These objects and other more are achieved by means of a so lar energy captor of the type in which a surface, having a high absorption power for the radiation to which it is exposed, is in heat exchange contact with a fluid to be heated, characterized by the fact that said surface is a membrane, of a material closen from among those currently available as permanent waterproofing membranes in the building industry, that forms the ouside boundary of a flow cavity for the fluid to be heated, said membrane being preferably chosen from among the class of materials including asphalt sheets, tarred paper, tarred felts, elastomeric membranes and membranes bonded with metal sheets, whereby said metal sheets may be so treated as to afford selective absorption id est, widely different coefficients of absorption for radiations of the various wavelengths.

According to a first general embodiment of the solar energy captor of the present invention, said cavity is formed between said membrane and a sheet that is impermeable with respect to the fluid to be heated, the spacing between said membrane and said impermeable sheet being maintained by spacers that afford at the same time a specified and controlled degree of resistance to the fluid to be heated, parallelly flowing to the surface of said membrane and impermeable sheet.

In a preferred embodiment of the solar energy captor according to the present invention, said impermeable sheet is the same as is usually used on the roofs of buildings in order to protect the underlying structures against rainwater seeping in, while the spacing means between said impermeable sheet and the solar radiation-absorbing membrane consists of a layer of controlled-size gravel or other material permeable to the fluid being heated, said fluid flowing through said gravel layer in a natural percolation motion, due to the natural slope of the roof itself from a fluid supplying and distributiong upstream channel to a downstream channel or gutter that will collect the heated fluid and take it away.

The present invention, as described above, concerns the use of a specific class of materials in the same structural form as is available from the trade.

An advantage thereof is obviously a very low cost; this is the easier to attain inasmuch as said class of materials is currently and wiledly used in the construction trades as waterproofing layers and coverings, and is characterized by unit cost generally on the low side.

The preferred class of materials, whose use is covered by the present invention, is that comprising asphalt sheets, tarred paper, tarred felts and elastomeric membranes.

These materials are in the form of flexible waterproof sheets, whose edges can be either welded or glued togeter so as to realize, once installed, impermeable barriers with no gaps at all.

Among the materials of this class, those longest known, but nevertheles still used nowadays, have a support of real felt made of natural fibres; more recently, said support has been replaced by paper or paperboard, while tar was used for impregnation. This is the origin of the expressions "tarred paper" and "tarred felt".

Still more recently however, these materials have been improved by using, instead of the felt paper, a support made with a special non-woven glass-fibre felt, which is further reinforced, in some instances, by a glass-fibre network or woven cloth; in other instances, the the glass-fibre support is replaced by jute, by a metal cloth, by polyester synthetic fibres, or by still other materials.

The products used for impregnation have also been improved in the course of time; nowadays, they are mainly obtained by blending possibly oxidized bitumens complying with particular theologic specifications, organic polymers such as atactic polypropylente, elastomers, stable plasticizers that will not migrate or segregate and finally very fine- -grained inorganic dust fillers. In order to distinguish them from the older types, the modern materials presently being offered by the trade are usually called asphalt sheets or membranes. Since some of the blends in use are very rich of elastomers and contain very little bitumen or a sphalt, or even none at all, while still other products are offered by the trade for use as permanent waterproofing membranes, which can hardly be defined as "asphalt", "bitu men", or elastomers, it is herein preferred to use the name "membranes", in a general way, with no adjectives. Some varieties of membranes available from the trade carry moreover on one face a sheet of aluminium or copper or stainless steel, as much thin as to not impair their flexibility, that is bonded thereto in the course of their manufa cturing process. It is appropriate to mention here those special chemical or eletrochemical processes that have been found recently, one of which is described, for example, in the Italian patent application No. 49262 A/77 filed on May 4th, 1977, in the names of Messrs. Airola, Brossa and Ferrari, according to which it is possible to coat any sur face of aluminium, copper or stainless steel with layers of metallic oxides, selenides or tellurides that are not only black, i.e. strongly absorbing for those radiations that prevail in the solar spectrum and having wavelenghts in the range between 3 and 2.5 micrometres, but that also show, on the other hand, a very low emission coefficient for infrared radiation, especially in the range between 2.5 and 20.0 micrometres, that characterizes in the heat loss from moderately hot surfaces due to radiation. As a result of said treatment , said metals can be provided with a se lective behaviour, that is particularly efficient in recovering the solar energy.

Membranes bonded with selective-absorption metal sheets oi the above type can obviously find a very convenient use in solar energy captors according to the present invention. The present invention is based on the fact that all the abo ve described materials are naturally black and that they tend to reach a high temperature when exposed to the sun.

In order to use them as solar energy captors, it is sufficient to build appropriate structures, wherein said materials join the other components that, in a general way, make up a solar energy captor, and that have been mentioned above. The peculiar aspects and advantages of the present invention will appear more clearly from the following description of a preferred embodyment, whose purpose is descripti ve only, but by no means limiting, with reference to the enclosed drawings in which:

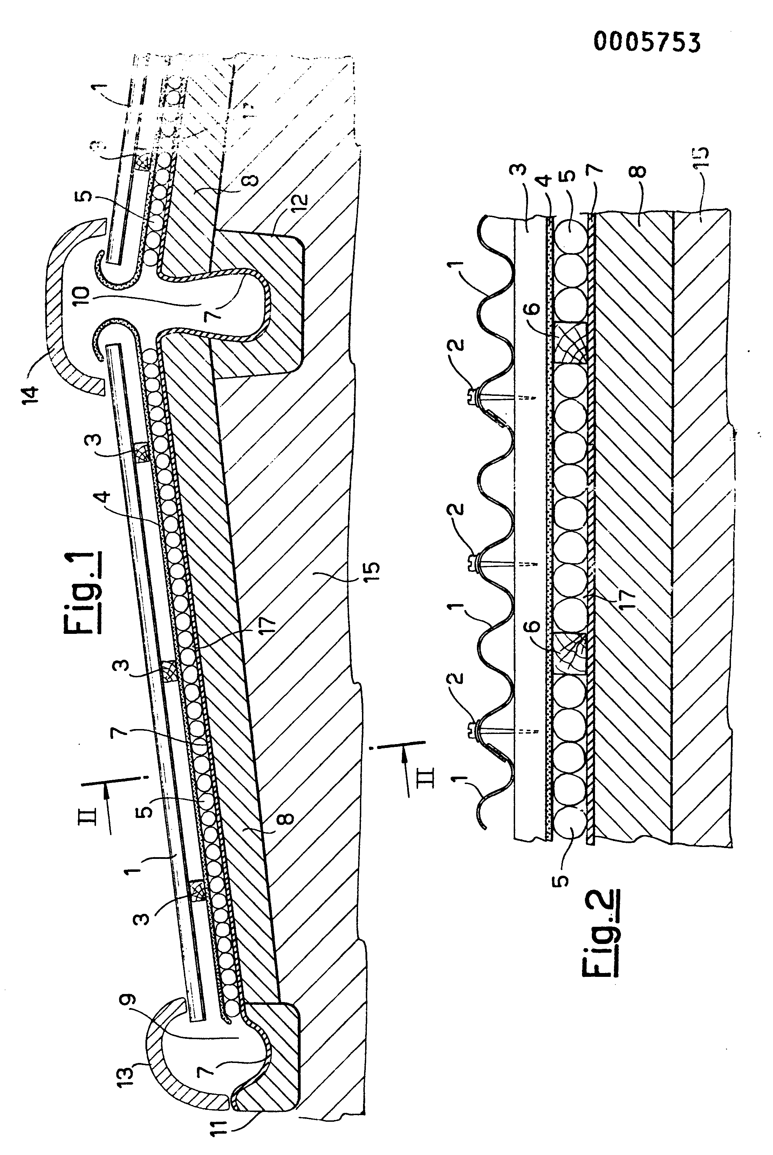

fig. 1 is a schematic section across a solar energy captor according to the invention applied on a sloping roof; said section is obtained by ideally cutting said captor and roof by means of a vertical plane parallel to the line of maximun slope of the roof;

fig. 2 is a cross-section of the same captor and roof on a larger scale, according to the lines II-II of fig. 1. Referring now to the drawing, reference 15 generally represents the structure supporting the solar energy captor, for example the structure of a roof or terrace, upon which a layer 8 of a termally insulating material is superim posed, which is covered in turn by a waterproof sheet 7, the latter being shaped as necessary to form the inner sur face of a cavity 17, as well as a header channel 10 for sup plying the fluid, namely water, to be heated, and a gutter channel 9 for collecting the heated fluid.

The outer surface of cavity 17 is formed by membrane 4 made by any of the above described materials, that will absord the solar radiation.

In the cavity 17 there are joists 6 of a type customary in roofings, and the cavity itself is filled up with a layer of controlled-size gravel, whose purpose it is to slow down the fluid flowing along the said cavity, from header 10 to gutter 9, to a specified and controlled extent, in order to ensure that said fluid will be in contact with the inner face of the membrane 4 during a predetermined and sufficient time.

It is thus possible to heat the fluid to an extent that will obviously depend on a number of parameters, including for instance the orientation of surface 4, the latitude of the location where it is installed, the season of the year, and so on.

It is also clear that the degree of resistance against fluid flow as caused by the layer 5 must be specified as a function of the slope ot the roof on which the solar energy captor is laid.

References 11 and 12 designate elements of thermally insulating material, shaped in order to provide thermal insulation for the header and collector channels of the fluid to be heated, while numbers 13 and 14 show tiles that will cover and protect said channels.

Another set of joist 3 supports, above the membrane 4, by known connecting means 2, a sheet 1 of a transparent barrier material, particularly and preferably a sheet of glass-reinforced polyester resin.

The details of the above described example are by no means limiting, and the following comments are intended to show the main variations that may be found expedient to introduce at times, for the best use of the present invention in accordance with the requirements of each particular application that is desired.

Firstly, the structure described in the example is intended for heating pure water: this is supplied to the header channel with a controlled flow in order to keep the water surface exactly level with the leading edge of the permeable layer 5: the water will percolate along said permeable layer while getting heated owing to the contact with the membrane 4 being collected in the gutter 9. Whenever it rains, the structure described in the example will behave like a very usual roof: gutter 9 will indeed collect rain water from the upper surface of screen 1, like any usual gutter. To this end, it is necessary to implement said structure with automatic devices; of well-known types, that are therefore not shown, which will stop supplying water to be heated whenever the sunshine fades, and will, on the other hand, deviate the cold rainwater towards a disposal. If it is desired to heat a fluid different from pure water, it is then preferable to provide an upper enclosure for channel 9, possibly sealkight, by extending the membrane 4 to the outer edge of the channel 9 and letting rainwater drain into a separate gutter. Secondly and in particular cases, for instance when the slope of the roof or covering is not sufficient to drive the fluid percolating through the cavity 17, a source of vacuum or reduced pressure may be provided downstream of the solar energy captor in order to help the fluid move in the desired sense, in this case too the channel 9 being closed in a sealtight manner, e.g. as above described. Thirdly, the permeable sheet is made, in the example shown, of controlled-size gravel that is made to stick onto the underlying layer 7 by means of bitumen.

It is obviously possible to substitute for the gravel any other permeable substance that will stay permeable over any time lenght, when submitted to the specific conditions of this use.

Accordingly, the assembly of gravel and joists 6 can be replaced by either solid elements or lattice-shaped elements that can be made of any rigid material, including for example grid-like members of rigid synthetic plastic materials, of metals, of ceramics, of glass, of cement, of bituminous compounds and so on, wherein appropriate grooves or an open structure provide passages for the fluid flow, while affording the desired degree of resistance. Of course the spacing elements or material will be selected depending on the desired or necessary resistance to the flow of fluid to be heated, the latter in turn being controlled by the stated factors (slope, desired flow rate, ecc.).

Similar results are obtained by using elements of fabric, felt or "mats", both woven or non-woven.

Finally, the waterproof sheet 7 of the example has also the characteristic properties of a membrane, and it can be placed between the insulating layer 8 and the support structure 15 when the known technique called "inverse roof" is used, or it can even be missing altogether, when permitted by the nature of the insulating materials 8, 11 and 12 and of support 15.

Waterproof coverings, built with membranes, are very commonplace in the usual building technique. As a result, there are many expert technicians of this trade, who will find it easy to use the above described concepts in order to provide solar energy captors for a large variety of applications, while still remaining within the limits of the present invention.

11

CLAIMS

1. Device for recovering solar energy, of the type in which a surface, having a high absorption power for the solar radiation to which it is exposed, is in heat-exchange contact with a fluid to be heated, characterized, in that said surface is a membrane chosen from among a class of materials used as permanent waterproofing membranes in the building industry, said membrane being also the wall exposed to solar radiation, of a cavity wherein the fluid to be heated is made to flow.

2. Device for recovering solar energy, characterized in that said membrane is selected in the class of materials comprising asphalt sheets, tarred paper, tarred felts, elastomeric membranes and membranes bonded with selective -absorption metal-sheets.

3. Device for recovering solar energy according to claim 1, characterized in that the other wall of said cavity is made of a sheet substantially impermeable to the fluid to be heated.

4. Device for recovering solar energy according to claim 1, characterized in that within said cavity there are provided spacing means between the membrane and the other wall of said cavity, providing a specified and controlled resistance to the flow of the fluid to be heated.

5. Device for recovering solar energy according to claim 4 characterized in that said fluid is water and said spacing means are chosen from among the class including gravel of a controlled size, solid elements with appropriate grooves or passages, grid shaped elements with an open structure, and fabrics or felts of woven or non woven materials.

6. Device for recovering solar energy according to claim 5, characterized in that said solid or grid-shaped elements are made of rigid synthetic plastic materials, of a metal, of ceramics, of glass, of cement or of bituminous compounds.

7. Device for recovering solar energy according to the preceding claims, characterized in that when applied on a building roof or covering, said impermeable sheet is the same waterproofing layer that is usually in place there as a part of the roof or covering.

8. Device for recovering solar energy according to claim 7, characterized in that said cavity is sloping from a header channel for supplying the water to be heated down to a gutter or channel to collect the heated water and take it away.

9. Device for recovering solar energy according to claim 7, characterized in that a source of vacuum or of reduced pressure is provided downstream of said cavity with respect to the desired flow direction of the water to be heated.

**Fig. 1**

**Fig. 2**

European Patent
Office

**EUROPEAN SEARCH REPORT**

| | **DOCUMENTS CONSIDERED TO BE RELEVANT** | | **CLASSIFICATION OF THE APPLICATION (Int. Cl.³)** |
|---|---|---|---|
| Category | Citation of document with indication, where appropriate, of relevant passages | Relevant to claim | F 24 J 3/02 |
| | <u>FR – A – 2 363 066</u> (COMMISSARIAT A L'ENERGIE ATOMIQUE)<br>* claim 1; page 4, lines 12–17; figure 1 * | 1,2,3,4,5 | |
| | <u>US – A – 4 008 708</u> (HAGARTY)<br>* column 2, lines 11–18; figure * | 1,2,3 | |
| | <u>US – A – 3 387 602</u> (THOMASON)<br>* column 2, lines 41–63; figure 1 * | 1,2,3,4,5 | |
| | <u>FR – A – 2 354 427</u> (STRAZA)<br>* page 5, lines 33 à 37; figure 7 * | 1,8 | **TECHNICAL FIELDS SEARCHED (Int.Cl.³)**<br><br>F 24 J |
| P | <u>US – A – 4 098 262</u> (PETERS)<br>* column 1, lines 64–67; figure 1 * | 1,2,7,9 | |
| A | <u>DE – A – 2 557 895</u> (KABEL–UND METALL–WERKE)<br>* page 7, lines 5–9; figure 1 * | 1 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X| The present search report has been drawn up for all claims

| Place of search | Date of completion of the search | Examiner |
|---|---|---|
| The Hague | 13-07-1979 | VAN GELDER |

EPO Form 1503.1  06.78